# EUROPÄISCHE PATENTSCHRIFT

(11) **EP 2 699 816 B1**
(45) Veröffentlichungstag und Bekanntmachung des Hinweises auf die Patenterteilung: **13.03.2019**
(21) Anmeldenummer: 12727243.3
(22) Anmeldetag: 29.03.2012
(51) Int. Cl.: F16D 13/75

(54) **NACHSTELLEINRICHTUNG FÜR EINE REIBUNGSKUPPLUNG**
READJUSTMENT DEVICE FOR A FRICTION CLUTCH
DISPOSITIF DE RATTRAPAGE POUR EMBRAYAGE À FRICTION

(30) Priorität: 21.04.2011 DE 102011018415
(43) Veröffentlichungstag der Anmeldung: 26.02.2014
(73) Patentinhaber: Schaeffler Technologies AG & Co. KG, 91074 Herzogenaurach (DE)
(72) Erfinder: AHNERT, Gerd, 77880 Sasbach (DE); LINDEN, Ute Sabine, 76275 Ettlingen (DE)
(86) Internationale Anmeldenummer: PCT/DE2012/000331
(87) Internationale Veröffentlichungsnummer: WO 2012/142990

(56) Entgegenhaltungen:
- DE-A1-102008 051 100
- DE-A1-102009 035 225
- DE-A1-102011 081 232

## Beschreibung

Die Erfindung betrifft eine Nachstelleinrichtung und ein Verfahren für eine Reibungskupplung, mit dessen Hilfe eine Funktionskontrolle der montierten Nachstelleinrichtung bis zu einer Endstellung, dem Verschleißbereichsende, erfolgen kann.

Reibungskupplungen können zum Ausgleich eines auftretenden Verschleißes von Reibbelägen mit einer kraftgesteuerten Nachstelleinrichtung versehen sein. Hier wird eine infolge eines Verschleißes ungünstige Entwicklung der Anpresskraft eines die Druckplatte der Reibungskupplung beaufschlagenden Hebelsystems, beispielsweise einer Tellerfeder, erfasst und abhängig von der Anpresskraft eine Nachstellung bewirkt. Alternativ kann ein bei einem Verschleiß der Reibbeläge der Kupplungsscheibe auftretender Fehlabstand zwischen dem Kupplungsgehäuse und dem Hebelsystem ermittelt und abhängig von dem Fehlabstand korrigiert werden. Zur Korrektur werden dabei zwischen der Druckplatte und dem Hebelsystem angeordnete Ausgleichsmittel wie Rampensysteme oder Gewinde verdreht.

Aus DE 10 2009 035 225 A1 ist eine Reibungskupplung mit einer weggesteuerten Nachstelleinrichtung bekannt, bei der eine sich in Abhängigkeit vom Abstand eines Hebelsystems und einer Anpressplatte axial verlagernde Klinke auf ein Ritzel einer an der Anpressplatte verdrehbar aufgenommenen Spindel wirkt, wobei eine auf der Spindel aufgenommene Spindelmutter bei Verdrehung der Spindel einen zwischen der Anpressplatte und der Tellerfeder angeordneten Rampenring eines Rampensystems verdreht, wodurch der ursprüngliche Abstand des Hebelsystems zur Anpressplatte wieder hergestellt wird. Dabei gleitet während des Hubs einer Gegenplatte gegenüber der Anpressplatte die Klinke auf den Zähnen des Ritzels und rastet bei einem vorgegebenen Verschleiß in eine Zahnlücke zwischen zwei Zähnen ein. Die Klinke nimmt beim nächsten Öffnungsvorgang der Reibungskupplung das Ritzel formschlüssig mit und verdreht dabei das Ritzel und damit die Spindel, wodurch die Spindelmutter den Rampenring um einen entsprechenden Winkelbetrag verdreht und die Reibungskupplung damit nachstellt. Der Rampenring ist dabei von einer Anfangsstellung, ohne nachgestelltem Verschleiß, bis zu einer Endstellung, mit maximal nachgestelltem Verschleiß, verdrehbar.

In der älteren, aber nicht vorveröffentlichten DE 10 2011 081 232 A1 ist eine Nachstelleinrichtung zur weggesteuerten Verschleißnachstellung für eine Reibungskupplung offenbart, umfassend eine Spindel mit einer Spindelmutter zur Verdrehung einer Anpressplatte relativ zu einer Gegenplatte über ein Rampensystem mit einem Rampenring zur axialen Verschiebung der Anpressplatte zur Gegenplatte in Abhängigkeit von einer relativen Verdrehung, wobei der Rampenring mindestens eine erste Eingriffsvorrichtung aufweist, wobei die erste Eingriffsvorrichtung formschlüssig mit der Spindelmutter verbunden ist. Schraubenköpfe von Schrauben, mittels derer Blechteile, in die das Mitnahmeprofil der Spindelmutter eingreift, mit dem Verstellring verschraubt sind, sind zur Verschraubung und zur Lösung der Verschraubung nur zugänglich, wenn der Verstellring demontiert ist.

Es besteht ein ständiges Bedürfnis eine Funktionskontrolle der fertig montierten Nachstelleinrichtung ohne erhöhten Zeitaufwand und ohne Beschädigung der Bauteile der Nachstelleinrichtung durchzuführen, so dass eine zuverlässige Funktion der Nachstelleinrichtung gewährleistet werden kann.

Es ist die Aufgabe der Erfindung eine Nachstelleinrichtung und ein Verfahren für eine Reibungskupplung zu schaffen, die eine vereinfachte und materialschonende Funktionsprüfung der fertig montierten Nachstelleinrichtung ermöglicht.

Die Lösung der Aufgabe erfolgt erfindungsgemäß durch die Merkmale des Anspruchs 1 und durch die Merkmale des Anspruches 7. Bevorzugte Ausgestaltungen der Erfindung sind in den Unteransprüchen angegeben.

Die erfindungsgemäße Nachstelleinrichtung zur weggesteuerten Verschleißnachstellung für eine Reibungskupplung umfasst eine Spindel mit einer Spindelmutter zur Verdrehung einer Anpressplatte relativ zu einer Gegenplatte über ein Rampensystem mit einem Rampenring zur axialen Verschiebung der Anpressplatte zur Gegenplatte in Abhängigkeit von einer relativen Verdrehung, wobei der Rampenring mindestens eine erste Eingriffsvorrichtung aufweist, wobei die erste Eingriffsvorrichtung formschlüssig mit der Spindelmutter verbunden ist. Erfindungsgemäß ist die erste Eingriffsvorrichtung derart ausgebildet, dass die erste Eingriffsvorrichtung in einem montierten Zustand lösbar mit der Spindelmutter verbunden ist.

Die Spindel ist mittels einer Halterung mit der Anpressplatte verbunden und ist durch ein mit der Spindel verbundenes Ritzel drehbar. Durch die Drehbewegung der Spindel kann eine auf der Spindel angeordnete Spindelmutter in eine Bewegung entlang der Spindel versetzt werden. Die Spindelmutter ist formschlüssig mit mindestens einer ersten Eingriffsvorrichtung verbunden, wobei die formschlüssige Verbindung beispielsweise in Form von aneinander angepassten und ineinander eingreifenden Verzahnungen ausgestaltet sein kann. Die formschlüssige Verbindung zwischen der Spindelmutter und der ersten Eingriffsvorrichtung kann derart ausgebildet sein, dass die Verbindung beidseitig stabil genug ist. Damit in einer Umfangsrichtung eine sichere und zwangsweise Verbindung gegeben ist, wodurch ein ungewolltes Bewegen des Rampenringes verhinderbar ist. Die Verbindung zwischen der Spindelmutter und der ersten Eingriffsvorrichtung kann durch die Fliehkraft unterstützt werden, wobei beispielsweise der Anpressdruck der ersten Eingriffsvorrichtung an die Spindelmutter erhöht werden kann. Die erste Eingriffsvorrichtung ist an einem Rampenring angeordnet, so dass bei einer Bewegung der Spindelmutter die erste Eingriffsvorrichtung mitgenommen werden kann und dadurch der Rampenring in eine Drehbewegung versetzt werden kann, wodurch mittels des Rampensystems eine axiale Nachstellung der Anpressplatte erfolgen kann. In einem montierten Zustand kann der Rampenring in einer Anfangsstellung angeordnet sein, wobei die erste Eingriffsvorrichtung in die Spindelmutter eingreift. In der Anfangsstellung ist keine Verschleißnachstellung erfolgt. Durch die Betätigung der Nachstelleinrichtung im Betrieb der Reibungskupplung ist der Rampenring mittels der Spindelmutter in eine Endstellung verbringbar. In der Endstellung ist die maximal mögliche axiale Nachstellung der Anpressplatte mittels des Rampensystems erfolgt. Ein Rückdrehen der Spindel und der Spindelmutter kann durch Sperrelemente vermieden werden. Die erfindungsgemäße Nachstelleinrichtung umfasst eine erste Eingriffsvorrichtung, die in einem montierten Zustand der Nachstelleinrichtung, beispielsweise ein einer Anfangsstellung, lösbar und/oder schaltbar mit der Spindelmutter verbindbar ist. Die erste Eingriffsvorrichtung ist beispielsweise in einem montierten Zustand von einer ersten Position in eine zweite Position verbringbar, wobei in der ersten Position eine formschlüssige Verbindung zwischen der ersten oder einen Eingriffsvorrichtung und der Spindelmutter herstellbar ist, und in der zweiten Position die formschlüssige Verbindung zwischen der ersten oder einen Eingriffsvorrichtung und der Spindelmutter trennbar ist. Durch das Verbringen der Eingriffsvorrichtung von der ersten Position in die zweite Position kann die formschlüssige Verbindung getrennt werden, wodurch eine Bewegung des Rampenringes unabhängig von der Spindelmutter ermöglicht werden kann. Dadurch ist der Rampenring in einem montierten Zustand der Nachstelleinrichtung frei bewegbar, beispielsweise von einer Anfangsstellung in eine Endstellung, ohne dass die Spindel, die Spindelmutter oder das Ritzel bewegt werden müssen. Dadurch kann in einem montierten Zustand der Nachstelleinrichtung eine Kontrolle der Funktion der Nachstelleinrichtung, insbesondere des Rampensystems, mit einem geringen Zeitaufwand und ohne die Gefahr der Beschädigung eines Bauteils, beispielsweise der Sperrelemente an dem Ritzel, ermöglicht werden.

Vorzugsweise ist die erste Eingriffsvorrichtung an einem Federelement angeordnet. Durch die Anordnung der Eingriffsvorrichtung an dem Federelement kann die Eingriffsvorrichtung mit einer radial nach außen in Richtung der Spindelmutter wirkenden Federkraft von der Anfangsstellung bis zur Endstellung beaufschlagt werden, wodurch ein unbeabsichtigtes Lösen der formschlüssigen Verbindung, beispielsweise durch dynamische Einflüsse, vermieden werden kann. Darüber hinaus ist das Federelement und damit die Lagerung der Eingriffsvorrichtung elastisch verformbar, wodurch der Eingriff der Eingriffsvorrichtung in die Spindelmutter, und damit der Formschluss der formschlüssigen Verbindung, verbessert werden kann. Besonders bevorzugt ist das Federelement in Form eines vorgespannten Federbleches ausgebildet. Das Federelement kann in Form eines streifenförmigen, vorgespannten Federbleches ausgebildet sein, und radial außen, teilumfänglich an dem Rampenring angeordnet sein. Das Federelement kann beispielsweise durch Schweißen, Kleben oder Nieten mit dem Rampenring verbunden sein. Das Federelement kann radial außenseitig, an der der Spindelmutter zugewandten Seite, einstückig ausgebildete Auskragungen zur formschlüssigen Verbindung mit der Spindelmutter aufweisen, wobei die erste Eingriffsvorrichtung durch die Auskragungen ausgebildet sein kann. Durch die Ausbildung des Federelements in Form eines streifenförmigen Federblechs ist das Federelement elastisch verformbar und kann dadurch den Formschluss zwischen der ersten Eingriffsvorrichtung und der Spindelmutter verbessern.

Erfindungsgemäß ist vorgesehen, dass an der ersten Eingriffsvorrichtung ein Entriegelungselement angeordnet ist, wobei das Entriegelungselement derart ausgebildet ist, dass die erste Eingriffsvorrichtung mit einer radial nach innen gerichteten Kraft beaufschlagbar ist. Das Entriegelungselement kann unmittelbar an der ersten Eingriffsvorrichtung oder an dem Federelement in radialer Richtung, beispielsweise nach radial innen und/oder radial außen, ausgebildet sein, wobei das Entriegelungselement in radialer Richtung bewegbar ist. Ein im Wesentlichen nach radial außen ausgebildetes Entriegelungselement kann eine vereinfachte Betätigung des Entriegelungselementes ermöglichen. Das Entriegelungselement ist von einer ersten Position, in der die erste Eingriffsvorrichtung formschlüssig mit der Spindelmutter verbunden ist, in eine zweite Position verbringbar, in der die formschlüssige Verbindung zwischen der ersten Eingriffsvorrichtung und der Spindelmutter getrennt oder gelöst ist. Das Entriegelungselement kann schaltbar ausgebildet sein, wobei das Entriegelungselement in der ersten oder zweiten Position arretierbar ist. Durch das Entriegelungselement kann das Lösen der formschlüssigen Verbindung vereinfacht werden, wodurch der Zeitaufwand verringert werden kann.

In einer besonders bevorzugten Ausgestaltungsform ist das Entriegelungselement in Form einer Blechlasche ausgebildet. Die Blechlasche kann in radiale Richtung, beispielsweise nach innen oder radial nach außen ausgebildet sein. Die Blechlasche ermöglicht eine vereinfachte und Bauraumsparende Betätigung des Entriegelungselementes.

Vorzugsweise ist eine zweite Eingriffsvorrichtung vorgesehen. Die zweite Eingriffsvorrichtung kann an demselben Federelement wie die erste Eingriffsvorrichtung angeordnet sein. Die zweite Eingriffsvorrichtung kann beispielsweise einstückig radial außenseitig an dem streifenförmigen Federblech ausgebildet sein. In der Anfangsstellung greift die zweite Eingriffsvorrichtung nicht in die Spindelmutter ein. Nach einem Lösen der ersten Eingriffsvorrichtung aus der formschlüssigen Verbindung mit der Spindelmutter und einem Verdrehen des Rampenringes in die Endstellung kann die zweite Eingriffsvorrichtung in eine formschlüssige Verbindung mit der Spindelmutter gebracht werden. Dadurch kann der Rampenring in der Endstellung über die zweite Eingriffsvorrichtung mit der Spindelmutter verbunden und somit arretiert werden.

Die Erfindung betrifft ferner eine Reibungskupplung umfassend mindestens eine wie vorstehend aus- und weitergebildete Nachstelleinrichtung. Durch die in montiertem Zustand der Nachstelleinrichtung lösbare formschlüssige Verbindung zwischen der ersten Eingriffsvorrichtung und der Spindelmutter wird ein vereinfachtes Überprüfen der Funktion der Nachstelleinrichtung ermöglicht. Durch ein mit einer Spindel verbundenes Ritzel kann eine auf der Spindel aufgenommene Spindelmutter bei Verdrehung der Spindel einen zwischen der Anpressplatte und einem Betätigungssystem angeordneten Rampenring des Rampensystems verdrehen, wodurch der ursprüngliche Abstand des Hebelsystems zur Anpressplatte wiederhergestellt werden kann. Das Betätigungssystem kann insbesondere einen als Tellerfeder ausgestalteten Hebel zum axialen Bewegen der Anpressplatte aufweisen. Dabei gleitet während des Hubs der Gegenplatte gegenüber der Anpressplatte die Klinke auf den Zähnen des Ritzels und rastet bei einem vorgegebenen Verschleiß in eine Zahnlücke zwischen zwei Zähnen ein. Die Klinke nimmt beim nächsten Öffnungsvorgang der Reibungskupplung das Ritzel formschlüssig mit und verdreht dabei das Ritzel und damit die Spindel, wodurch die Spindelmutter den Rampenring um einen entsprechenden Winkelbetrag verdreht und die Reibungskupplung damit nachstellt.

Ein Betätigungssystem zur Betätigung der Nachstelleinrichtung kann als ein Hebelsystem ausgestaltet sein, wobei unter einem Hebelsystem insbesondere eine Hebeleinrichtung zu verstehen ist, die sich unter Ausbildung eines in einer beispielsweise gezogenen Reibungskupplung einarmigen Hebels oder in einer gedrückten Reibungskupplung zweiarmigen Hebels an dem Kupplungsgehäuse abstützt, wobei der Hebel gegen das Gehäuse axial mittels eines oder mehrerer Energiespeicher verspannt ist, um eine Anpresskraft gegenüber der Anpressplatte aufbringen zu können, wodurch diese unter Ausbildung eines Reibeingriffs mit den Reibbelägen einer Kupplungsscheibe mit einer Gegenplatte, die als Einmassenschwungrad oder als Sekundärteil eines Zweimassenschwungrads ausgebildet sein kann, axial verspannt wird. Vorzugsweise kann das Hebelsystem als Tellerfeder ausgebildet sein, die mittels eines radial äußeren Kraftrands als Energiespeicher dient und radial innen mittels Tellerfederzungen von dem Betätigungssystem axial betätigt wird, indem dieses die Tellerfederzungen zum Öffnen der Reibungskupplung gegen sich zieht. Zur Rückstellung der Anpressplatte während eines Ausrückvorgangs mit nachlassender Anpresskraft sind zwischen dem Kupplungsgehäuse und der Anpressplatte axial der Anpresskraft entgegenwirkende Energiespeicher wie Blattfedern vorgesehen, die die Anpressplatte in Richtung Kupplungsgehäuse bei nachlassender Anpresskraft während des Ausrückvorgangs der Reibungskupplung verlagern. Ein Teil der Rückstellkraft dieser Energiespeicher kann vorzugsweise zur Nachstellung der Reibungskupplung verwendet werden, wobei diese entsprechend für diesen Vorgang dimensioniert sind.

Die Nachstelleinrichtung kann eine Verdreheinrichtung steuern, die auf der Anpressplatte aufgenommen sein kann, beispielsweise kann eine Blechhalterung mit der Anpressplatte vernietet sein, mittels derer die Verdreheinrichtung aufgenommen ist. Die Verdreheinrichtung kann in der Weise ausgestaltet sein, dass eine axial auf die Verdreheinrichtung übertragene Kraft mittels eines Getriebes in eine in Umfangsrichtung auf das Rampensystem wirkende Kraft umgelenkt wird. Vorteilhafterweise kann die Verdreheinrichtung eine verdrehbar auf der Anpressplatte aufgenommene Spindel sein, die von dem Ritzel angetrieben wird und eine Spindelmutter aufnimmt, die in ein ringförmig ausgestaltetes Rampensystem formschlüssig eingreift. Das Rampensystem kann dabei beispielsweise ein Rampenring mit axial ausgebildeten, über den Umfang verteilten Rampen sein, der mit an der Anpressplatte korrespondierend angeformten oder angebrachten Gegenrampen in Wechselwirkung tritt, so dass die axiale Höhe bei Verdrehung der Rampen in Richtung der gegenläufigen Rampensteigungen von Rampenring und Gegenrampen zunimmt. Der Rampenring kann für einen formschlüssigen Eingriff der Spindelmutter eine der Anzahl von Eingriffsmitteln entsprechende Anzahl von Ausnehmungen aufweisen, mit denen die Eingriffsmittel einen Formschluss bilden. Dabei können die Eingriffsmittel an der Spindelmutter vorgesehene, beispielsweise aus dem Material dieser ausgeformte, kalottenartige, ballige oder ähnlich geformte Profile sein, die in die Ausnehmungen verschwenkbar eingreifen, so dass sich bei einer linearen Verlagerung der Spindelmutter entlang der Spindel die Profile der von diesen in einem Kreisbogen verdrehten Ausnehmungen entsprechend in den Ausnehmungen verschwenken beziehungsweise mit einem Radialspiel in den Ausnehmungen verlagern können. Dabei können die Profile einen Außenradius aufweisen, der an eine kreisbogenförmige Ausbildung der Ausnehmungen und an die relative Verdrehung von Spindelmutter und Rampenring angepasst sind, so dass sich diese gegeneinander ohne Spiel bei einem Nachstellvorgang verdrehen. Es hat sich gezeigt, dass zwei mit zwei Profilen in Wechselwirkung tretende Ausnehmungen vorteilhaft sein können, wobei die Profile auch an dem Rampenring und die Ausnehmungen an der Spindelmutter vorgesehen sein können. Es versteht sich, dass die Spindelmutter auf der Spindel gegen Verdrehung gesichert verlagert wird. Die Steigung des Gewindes der Spindel und der Spindelmutter sind so ausgebildet, dass die Verdreheinrichtung selbsthemmend wirkt. Andererseits kann die Steigung des Gewindes an den gewünschten Verdrehwinkel des Rampenrings angepasst werden, um den dieser bei einem Nachstellvorgang verdreht werden soll.

Zur Steuerung der Verdrehung durch die Nachstelleinrichtung treten die Nachstelleinrichtung und die Verdreheinrichtung im Nachstellfall formschlüssig miteinander in Wechselwirkung. Dabei ist es von Vorteil, wenn die Nachstelleinrichtung am Kupplungsgehäuse befestigt ist, so dass während der Montage das Kupplungsgehäuse mit Hebelsystem und Nachstelleinrichtung und die Anpressplatte mit Rampensystem als voneinander unabhängige Module teilmontiert werden können. Das Ritzel weist ein Umfangsprofil auf, beispielsweise am Außenumfang oder einem axial abgesetzten kleineren Radius über den Umfang verteilte Zähne, die zur besseren Ausbildung eines Formschlusses mit der Nachstelleinrichtung sägezahnartig von der Anpressplatte wegweisend ausgebildet sein können.

Weiterhin betrifft die Erfindung ein Verfahren zur Prüfung der Funktion einer Reibungskupplung mit einer wie oben beschriebenen aus- und weitergebildeten Nachstelleinrichtung, umfassend die Schritte
Bereitstellen einer montierten Nachstelleinrichtung, wobei ein Rampenring der Nachstelleinrichtung in einer Anfangsstellung angeordnet ist, wobei eine erste Eingriffsvorrichtung formschlüssig mit einer Spindelmutter verbunden ist,
Betätigen eines Entriegelungselementes zum Lösen der formschlüssigen Verbindung zwischen der ersten Eingriffsvorrichtung und der Spindelmutter,
Verdrehen des Rampenringes von der Anfangsstellung in eine Endstellung,
Prüfen der axialen Zustellung der Nachstelleinrichtung,
Zurückdrehen des Rampenringes in die Anfangsstellung,
Betätigen des Entriegelungselementes zum formschlüssigen Verbinden der ersten Eingriffsvorrichtung mit der Spindelmutter.

In der Anfangsstellung weist die montierte Nachstelleinrichtung keine axiale Nachstellung mittels des Rampensystems auf. Durch das Betätigen des Entriegelungselementes, das Bewegen des Entriegelungselementes von der ersten in die zweite Position, kann die formschlüssige Verbindung zwischen der ersten Eingriffsvorrichtung und der Spindelmutter gelöst werden, wodurch der Rampenring frei und unabhängig von der Spindelmutter, der Spindel und dem Ritzel bewegt werden kann. Das Entriegelungselement kann in der zweiten Position arretiert werden. Der Rampenring kann anschließend von der Anfangsstellung in die Endstellung verdreht werden, wobei mittels des Rampensystems die maximal mögliche axiale Nachstellung der Nachstelleinrichtung erfolgen kann. Die axiale Nachstellung der Anpressplatte kann geprüft werden, und es können Kupplungsparametern aufgenommen werden, beispielsweise in Form von Kennlinien. Nach der Prüfung der Funktion der Nachstelleinrichtung und/ oder der Aufnahme von Kupplungsparametern kann der Rampenring in die Anfangsstellung zurückgedreht werden. Durch erneutes Betätigen des Entriegelungselementes, Verbringen von der zweiten in die erste Position, kann die formschlüssige Verbindung zwischen der ersten Eingriffsvorrichtung und der Spindelmutter wiederhergestellt werden. Dadurch kann eine vereinfachte und zeitsparende Prüfung der Funktion der Nachstelleinrichtung ermöglicht werden.

Vorzugsweise umfasst das Verfahren zusätzlich die Schritte
Betätigen des Entriegelungselementes in der Endstellung zur Herstellung einer formschlüssigen Verbindung zwischen einer zweiten Eingriffsvorrichtung und der Spindelmutter, und Betätigen des Entriegelungselementes in der Endstellung zum Lösen der formschlüssigen Verbindung zwischen der zweiten Eingriffsvorrichtung und der Spindelmutter. Dies wird insbesondere ermöglicht durch die Bereitstellung einer Nachstelleinrichtung mit einer zweiten Eingriffsvorrichtung. Durch ein Betätigen des Entriegelungselementes in der Endstellung kann eine formschlüssige Verbindung zwischen dem zweiten Eingriffselement und der Spindelmutter eingestellt werden, wodurch eine Bewegung des Rampenringes in der Endstellung vermieden werden kann. Dies ermöglicht eine Verbesserung der ermittelten Kennlinien.

Nachfolgend wird die Erfindung unter Bezugnahme auf die anliegenden Zeichnungen anhand bevorzugter Ausführungsbeispiele exemplarisch erläutert. Es zeigen:
- Fig. 1:: eine schematische Darstellung einer erfindungsgemäßen Nachstelleinrichtung;
- Fig. 2:: eine schematische Darstellung einer Nachstelleinrichtung in einer Anfangsstellung;
- Fig. 3:: eine schematische Ansicht eines in eine Endstellung verschwenkten Rampenringes;
- Fig. 4:: eine schematische Ansicht des in Fig. 3 dargestellten Rampenringes mit einer formschlüssigen Verbindung einer zweiten Eingriffsvorrichtung mit einer Spindelmutter;
- Fig. 5:: eine schematische Darstellung einer Nachstelleinrichtung mit einem radial außen angeordneten Entriegelungselement.

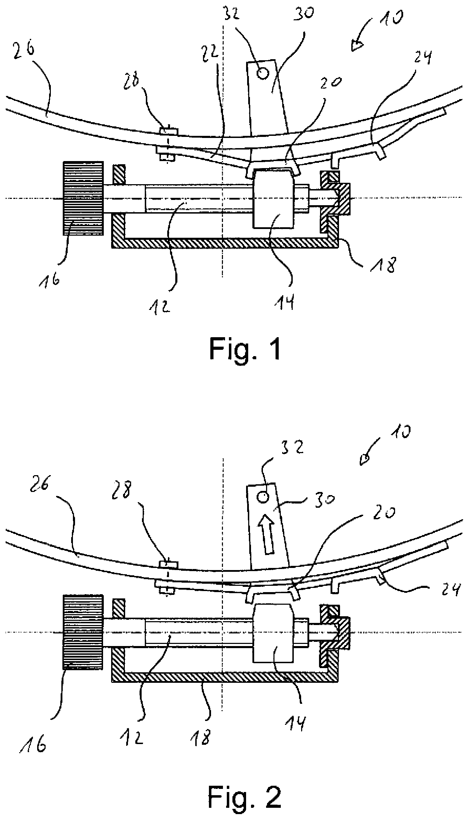

Die in Fig. 1 in einer Anfangsstellung dargestellte Nachstelleinrichtung 10 weist zur Betätigung einer Nachstellbewegung eine Spindel 12 auf, an welcher eine Spindelmutter 14 und ein Ritzel 16 angeordnet sind. Die Spindel 12 ist mittels einer Spindelhalterung 18 an einer Anpressplatte (nicht dargestellt) befestigt. Die Spindelmutter 14 ist formschlüssig mit einer ersten Eingriffsvorrichtung 20 verbunden, welche an einem Federelement 22 in Form eines streifenförmigen, vorgespannten Federbleches ausgebildet ist. Auf dem Federelement 22 ist eine zweite Eingriffsvorrichtung 24 angeordnet, welche in der Anfangsstellung nicht in einem formschlüssigen Eingriff mit der Spindelmutter 14 ist. Das Federelement 22 ist radial außen an einem Rampenring 26 angeordnet und erstreckt sich entlang eines Teils des Umfangs des Rampenringes 26. Die Verbindung des Federelementes 22 mit dem Rampenring 26 ist an einem Ende des Federelementes 22 in Form eines Nietes 28 ausgebildet, wobei das andere Ende des Federelementes beispielsweise an den Rampenring 26 geschweißt oder geklebt ist. An der ersten Eingriffsvorrichtung 20 ist ein Entriegelungselement 30 angeordnet, wobei das Entriegelungselement 30 nach radial innen, in den Rampenring 26 hineinragt. Das Entriegelungselement 30 ist in einer ersten Position dargestellt, in der eine Eingriffsvorrichtung 20, 24, insbesondere die erste Eingriffsvorrichtung 20, formschlüssig mit der Spindelmutter 14 verbunden ist. Das Entriegelungselement 30 ist in Form eines Blechstreifens ausgebildet und weist radial innenseitig eine Öffnung 32, beispielsweise zur Aufnahme eines Werkzeughakens zur Betätigung des Entriegelungselementes 30 auf.

Das Entriegelungselement 30 ist in Fig. 2 in einer zweiten Position dargestellt, in der die formschlüssige Verbindung zwischen der Eingriffsvorrichtung 20, 24, insbesondere der ersten Eingriffsvorrichtung 20, und der Spindelmutter 14 gelöst ist, wodurch ein Spindel 12 unabhängiges Drehen des Rampenringes 26 ermöglicht wird.

Eine in eine Endstellung verschwenkte Nachstelleinrichtung 10 zeigt Fig, 3. Der Rampenring 26 wurde in Pfeilrichtung von der Anfangsstellung in die Endstellung verschwenkt. In der Endstellung ist die zweite Eingriffsvorrichtung 24 an der Spindelmutter 14 angeordnet, wobei das Entriegelungselement 30 in der zweiten Position dargestellt ist. Die zweite Eingriffsvorrichtung 24 ist nicht formschlüssig mit der Spindelmutter 14 verbunden.

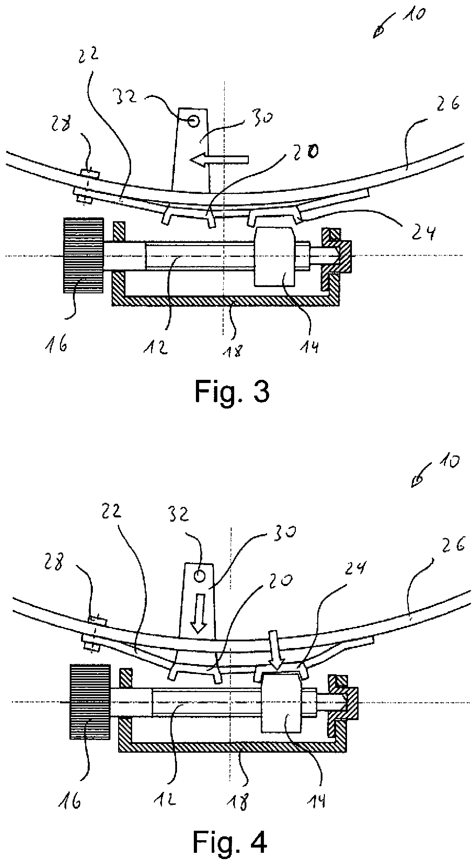

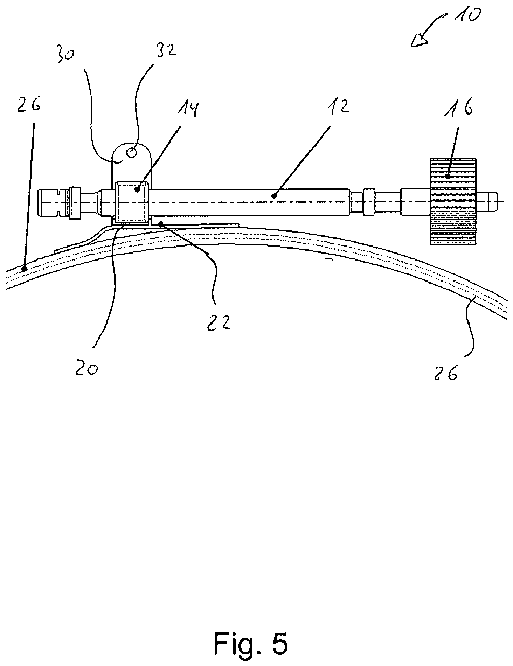

Eine formschlüssige Verbindung in der Endstellung (Fig. 4) zwischen der zweiten Eingriffsvorrichtung 24 und der Spindelmutter 14 wird durch ein Bewegen des Entriegelungselementes 30 von der zweiten Position in die erste Position erreicht. Durch die elastische Ausgestaltung des Federelementes 22 kann durch das an der ersten Eingriffsvorrichtung 20 angeordnete Entriegelungselement 30 auf die zweite Eingriffsvorrichtung 24 in radialer Richtung bewegt werden. Eine Nachstelleinrichtung 10 mit einem nach radial außen angeordneten Entriegelungselement 30 ist in Fig. 5 dargestellt. Das Entriegelungselement 30 ist an der ersten Eingriffsvorrichtung 20 angeordnet und überlagert zumindest teilweise die Spindelmutter 14. Das Entriegelungselement 30 ragt radial nach außen über die Spindelmutter 14 hinaus, und weist radial außenseitig eine Öffnung 32 auf. Durch die radial außenseitige Anordnung des Entriegelungselementes 30 kann die Betätigung des Entriegelungselementes 30 verbessert werden, da die Öffnung 32 besser zugänglich ist als beispielsweise bei einer radial innenseitig angeordneten Öffnung 32. Das Federelement 22 ist beispielsweise durch Schweißen oder Kleben mit dem Rampenring 26 verbunden.

### Bezugszeichenliste

- 10: Nachstelleinrichtung
- 12: Spindel
- 14: Spindelmutter
- 16: Ritzel
- 18: Spindelhalterung
- 20: erste Eingriffsvorrichtung
- 22: Federelement
- 24: zweite Eingriffsvorrichtung
- 26: Rampenring
- 28: Niet
- 30: Entriegelungselement
- 32: Öffnung

## Patentansprüche

1. Nachstelleinrichtung zur weggesteuerten Verschleißnachstellung für eine Reibungskupplung, umfassend
eine Spindel (12) mit einer Spindelmutter (14) zur Verdrehung einer Anpressplatte relativ zu einer Gegenplatte über ein Rampensystem mit einem Rampenring (26) zur axialen Verschiebung der Anpressplatte zur Gegenplatte in Abhängigkeit von einer relativen Verdrehung,
wobei der Rampenring (26) mindestens eine erste Eingriffsvorrichtung (20) aufweist, wobei die erste Eingriffsvorrichtung (20) formschlüssig mit der Spindelmutter (14) verbunden ist, **dadurch gekennzeichnet, dass** die erste Eingriffsvorrichtung (20) derart ausgebildet ist, dass die erste Eingriffsvorrichtung (20) in einem montierten Zustand lösbar mit der Spindelmutter (14) verbunden ist, wobei an der ersten Eingriffsvorrichtung (20) ein Entriegelungselement (30) angeordnet ist, wobei das Entriegelungselement (30) derart ausgebildet ist, dass die erste Eingriffsvorrichtung (20) mit einer radial nach innen gerichtete Kraft beaufschlagbar ist.

2. Nachstelleichrichtung nach Anspruch 1, **dadurch gekennzeichnet, dass** die erste Eingriffsvorrichtung (20) an einem Federelement (22) angeordnet ist.

3. Nachstelleinrichtung nach Anspruch 2, **dadurch gekennzeichnet, dass** das Federelement (22) in Form eines vorgespannten Federbleches ausgebildet ist.

4. Nachstelleichrichtung nach einem der Ansprüche 1 bis 3, **dadurch gekennzeichnet, dass** Entriegelungselement (30) in Form einer Blechlasche ausgebildet ist.

5. Nachstelleichrichtung nach einem der Ansprüche 1 bis 4, **dadurch gekennzeichnet, dass** eine zweite Eingriffsvorrichtung (24) vorgesehen ist.

6. Reibungskupplung, umfassend mindestens eine nach einem der Ansprüche 1 bis 5 ausgebildete Nachstelleinrichtung (10).

7. Verfahren zur Prüfung der Funktion einer Reibungskupplung mit einer nach einem der Ansprüche 1 bis 5 ausgebildeten Nachstelleinrichtung (10), umfassend die Schritte:
- Bereitstellen einer montierten Nachstelleinrichtung (10), wobei ein Rampenring (26) der Nachstelleinrichtung (26) in einer Anfangsstellung angeordnet ist, wobei eine erste Eingriffsvorrichtung (20) formschlüssig mit einer Spindelmutter (14) verbunden ist,
- Betätigen eines Entriegelungselementes (30) zum Lösen der formschlüssigen Verbindung zwischen der ersten Eingriffsvorrichtung (20) und der Spindelmutter (14),
- Verdrehen des Rampenringes (26) von der Anfangsstellung in eine Endstellung,
- Prüfen der axialen Zustellung der Nachstelleinrichtung (10),
- Zurückdrehen des Rampenringes (26) in die Anfangsstellung,
- Betätigen des Entriegelungselementes (30) zum formschlüssigen Verbinden der ersten Eingriffsvorrichtung (20) mit der Spindelmutter (14).

8. Verfahren nach Anspruch 7, **dadurch gekennzeichnet, dass** zusätzlich die Schritte vorgesehen sind:
- Betätigen des Entriegelungselementes (30) in der Endstellung zur Herstellung einer formschlüssigen Verbindung zwischen einer zweiten Eingriffsvorrichtung (24) und der Spindelmutter (14), und
- Betätigen des Entriegelungselementes (30) in der Endstellung zum Lösen der formschlüssigen Verbindung zwischen der zweiten Eingriffsvorrichtung (24) und der Spindelmutter (14).

## Claims

1. Readjustment device for displacement-controlled wear readjustment for a friction clutch, comprising
a spindle (12) with a spindle nut (14) for rotating a pressure plate relative to a counter plate by means of a ramp system having a ramp ring (26) for moving the pressure plate axially relative to the counter plate in accordance with a relative rotation,
wherein the ramp ring (26) has at least one first engagement device (20),
wherein the first engagement device (20) is connected positively to the spindle nut (14), **characterized in that**
the first engagement device (20) is designed in such a way that, in an assembled state, the first engagement device (20) is releasably connected to the spindle nut (14), wherein an unlocking element (30) is arranged on the first engagement device (20), wherein the unlocking element (30) is designed in such a way that the first engagement device (20) can be subjected to a force directed radially inward.

2. Readjustment device according to Claim 1, **characterized in that** the first engagement device (20) is arranged on a spring element (22).

3. Readjustment device according to Claim 2, **characterized in that** the spring element (22) is in the form of a prestressed spring plate.

4. Readjustment device according to one of Claims 1 to 3, **characterized in that** the unlocking element (30) is in the form of a sheet metal tab.

5. Readjustment device according to one of Claims 1 to 4, **characterized in that** a second engagement device (24) is provided.

6. Friction clutch comprising at least one readjustment device (10) designed in accordance with one of Claims 1 to 5.

7. Method for checking the functioning of a friction clutch having a readjustment device (10) designed in accordance with one of Claims 1 to 5, comprising the following steps:
- providing an assembled readjustment device (10), wherein a ramp ring (26) of the readjustment device (26) is arranged in an initial position, wherein a first engagement device (20) is connected positively to a spindle nut (14),
- actuating an unlocking element (30) to release the positive connection between the first engagement device (20) and the spindle nut (14),
- rotating the ramp ring (26) from the initial position to an end position,
- checking the axial advance of the readjustment device (10),
- rotating the ramp ring (26) back into the initial position,
- actuating the unlocking element (30) for positive connection of the first engagement device (20) to the spindle nut (14).

8. Method according to Claim 7, **characterized in that** the following steps are provided in addition:
- actuating the unlocking element (30) in the end position to produce a positive connection between a second engagement device (24) and the spindle nut (14), and
- actuating the unlocking element (30) in the end position to release the positive connection between the second engagement device (24) and the spindle nut (14).

## Revendications

1. Dispositif de rattrapage servant au rattrapage d'usure commandé par la course pour un embrayage à friction, le dispositif de rattrapage comportant une broche (12) dotée d'un écrou de broche (14) pour faire tourner un plateau de pression par rapport à un plateau de réaction par le biais d'un système à rampes doté d'un anneau à rampes (26) permettant le déplacement axial du plateau de pression par rapport au plateau de réaction en fonction d'une rotation relative,
l'anneau à rampes (26) comprenant au moins un premier dispositif d'entrée en prise (20),
le premier dispositif d'entrée en prise (20) étant relié par complémentarité de forme à l'écrou de broche (14), **caractérisé en ce que** le premier dispositif d'entrée en prise (20) est réalisé de telle sorte que le premier dispositif d'entrée en prise (20) est, dans un état monté, relié de manière amovible à l'écrou de broche (14), un élément de déverrouillage (30) étant disposé sur le premier dispositif d'entrée en prise (20), l'élément de déverrouillage (30) étant réalisé de telle sorte que le premier dispositif d'entrée en prise (20) peut être soumis à une force orientée radialement vers l'intérieur.

2. Dispositif de rattrapage selon la revendication 1, **caractérisé en ce que** le premier dispositif d'entrée en prise (20) est disposé sur un élément ressort (22).

3. Dispositif de rattrapage selon la revendication 2, **caractérisé en ce que** l'élément ressort (22) est réalisé sous la forme d'une tôle élastique précontrainte.

4. Dispositif de rattrapage selon l'une quelconque des revendications 1 à 3, **caractérisé en ce que** l'élément de déverrouillage (30) est réalisé sous la forme d'une languette en tôle.

5. Dispositif de rattrapage selon l'une quelconque des revendications 1 à 4, **caractérisé en ce qu'**un deuxième dispositif d'entrée en prise (24) est prévu.

6. Embrayage à friction, comportant au moins un dispositif de rattrapage (10) réalisé selon l'une quelconque des revendications 1 à 5.

7. Procédé de contrôle du fonctionnement d'un embrayage à friction comprenant un dispositif de rattrapage (10) réalisé selon l'une quelconque des revendications 1 à 5, le procédé comportant les étapes consistant à :
- fournir un dispositif de rattrapage monté (10), un anneau à rampes (26) du dispositif de rattrapage (26) étant disposé dans une position initiale, un premier dispositif d'entrée en prise (20) étant relié par complémentarité de forme à un écrou de broche (14),
- actionner un élément de déverrouillage (30) pour libérer la liaison par complémentarité de forme entre le premier dispositif d'entrée en prise (20) et l'écrou de broche (14),
- faire tourner l'anneau à rampes (26) de la position initiale à une position finale,
- contrôler l'avance axiale du dispositif de rattrapage (10),
- ramener par rotation l'anneau à rampes (26) à la position initiale,
- actionner l'élément de déverrouillage (30) pour relier par complémentarité de forme le premier dispositif d'entrée en prise (20) à l'écrou de broche (14).

8. Procédé selon la revendication 7, **caractérisé en ce qu'**en outre les étapes suivantes sont prévues :
- actionner l'élément de déverrouillage (30) dans la position finale pour produire une liaison par complémentarité de forme entre un deuxième dispositif d'entrée en prise (24) et l'écrou de broche (14), et
- actionner l'élément de déverrouillage (30) dans la position finale pour libérer la liaison par complémentarité de forme entre le deuxième dispositif d'entrée en prise (24) et l'écrou de broche (14).
